# EUROPEAN PATENT APPLICATION

(11) **EP 4 156 709 A1**
(43) Date of publication of application: **29.03.2023**
(21) Application number: 21825098.3
(22) Date of filing: 10.06.2021
(51) Int. Cl.: H04R 1/10

(54) **HEADSET AND EARPHONE ASSEMBLY**

(30) Priority: 18.06.2020 CN 202021146638 U
(71) Applicant: Huawei Technologies Co., Ltd., Longgang District, Shenzhen, Guangdong 518129 (CN)
(72) Inventor: LIAO, Yuan, Shenzhen, Guangdong 518129 (CN); ZHAO, Ying, Shenzhen, Guangdong 518129 (CN)
(74) Representative: Maiwald GmbH
(86) International application number: PCT/CN2021/099495
(87) International publication number: WO 2021/254253

(57) **Abstract**

This application provides a headphone, including a first ear cover, a second ear cover, and a headband. The first ear cover includes a first headphone housing, and a first Bluetooth module and a first speaker that are located inside the first headphone housing, the first Bluetooth module receives a Bluetooth signal from a terminal, and the first speaker plays audio based on the Bluetooth signal received by the first Bluetooth module. The second ear cover includes a second headphone housing, and a second Bluetooth module and a second speaker that are located inside the second headphone housing, the second Bluetooth module receives a Bluetooth signal from the terminal, and the second speaker plays audio based on the Bluetooth signal received by the second Bluetooth module. Two ends of the headband are respectively connected to the first headphone housing and the second headphone housing. In the headphone in this application, the first ear cover and the second ear cover can independently receive the Bluetooth signal from the terminal and play audio, to resolve a problem that a relative playback delay occurs when the first ear cover and the second ear cover play audio, so as to improve real-time transmission of the headphone. This application further provides a headphone assembly.

## Description

This application claims priority to Chinese Patent Application No. 20202114663 8.3, filed with the China National Intellectual Property Administration on June 18, 2020 and entitled "HEADPHONE AND HEADPHONE ASSEMBLY", which is incorporated herein by reference in its entirety.

### TECHNICAL FIELD

This application relates to the field of audio technologies, and in particular, to a headphone and a headphone assembly.

### BACKGROUND

When a current headphone is in use, usually one ear cover first receives an external Bluetooth signal and then transmits the external Bluetooth signal to the other ear cover in a Bluetooth manner, and consequently, a problem that a relative playback delay occurs when the two ear covers play audio is caused, resulting in relatively poor real-time transmission of the headphone.

### SUMMARY

This application provides a headphone and a headphone assembly, to resolve a problem that a relative playback delay occurs when two ear covers play audio, so as to improve real-time transmission of the headphone.

According to a first aspect, this application provides a headphone, including a first ear cover, a second ear cover, and a headband. The first ear cover includes a first headphone housing, and a first Bluetooth module and a first speaker that are located inside the first headphone housing, the first Bluetooth module is configured to receive a Bluetooth signal from a terminal, and the first speaker is electrically connected to the first Bluetooth module and is configured to play audio based on the Bluetooth signal received by the first Bluetooth module. The second ear cover includes a second headphone housing, and a second Bluetooth module and a second speaker that are located inside the second headphone housing, the second Bluetooth module is configured to receive a Bluetooth signal from the terminal, and the second speaker is electrically connected to the second Bluetooth module and is configured to play audio based on the Bluetooth signal received by the second Bluetooth module. Two ends of the headband are respectively connected to the first headphone housing and the second headphone housing.

The foregoing Bluetooth modules may also be referred to as Bluetooth receivers, and the Bluetooth modules are communicatively connected to the terminal, and are further configured to send Bluetooth signals to the terminal.

The terminal may be an electronic product that may send and receive the Bluetooth signal, such as a mobile phone, a tablet computer, a laptop computer, an in-vehicle infotainment, a sales point terminal, a Walkman, a smart band, a smart watch, an augmented reality device, or a virtual reality device.

In the headphone in this application, both the first ear cover and the second ear cover include a Bluetooth module. Both the first ear cover and the second ear cover can be independently connected to the terminal. When a user plays audio by using the headphone, the first ear cover and the second ear cover can synchronously receive a Bluetooth signal from the terminal, and play audio synchronously based on the Bluetooth signal, to avoid a problem that a relative playback delay occurs between the first ear cover and the second ear cover, so as to improve real-time transmission of the headphone.

In an implementation, the headband is detachably connected to the first headphone housing and the second headphone housing.

When the headphone is in transportation or is accommodated, the headband and each of the first ear cover and the second ear cover can be rapidly detached. The detached headband, first ear cover, and second ear cover can be independently placed in a headphone case, so that a space required for the headphone case to accommodate the headphone can be reduced, thereby reducing a size of the headphone case and facilitating collection and carrying of the headphone.

It should be understood that both the first ear cover and the second ear cover can be independently connected to the terminal. Therefore, a line or a cable connected between the first ear cover and the second ear cover does not need to be disposed in the headband, so that a connection manner between the headband and each of the first ear cover and the second ear cover can be designed as a detachable connection, thereby improving detachability of the headphone and facilitating collection and carrying of the headphone.

In an implementation, the first headphone housing is provided with a first fastening groove, and an opening of the first fastening groove is located on a surface of the first headphone housing. The second headphone housing is provided with a second fastening groove, and an opening of the second fastening groove is located on a surface of the second headphone housing. The headband includes a first end portion and a second end portion that are disposed opposite to each other. The first end portion is located in the first fastening groove and is in an interference fit with the first fastening groove; and the second end portion is located in the second fastening groove and is in an interference fit with the second fastening groove, to implement detachable connections between the headband and each of the first headphone housing and the second headphone housing, so as to facilitate disassembly or assembly between the headband and each of the first headphone housing and the second headphone housing.

In another implementation, the first end portion is connected to the first headphone housing in a magnetic attraction or buckle manner, and the second end portion is connected to the second headphone housing in a magnetic attraction or buckle manner, to implement detachable connections between the headband and each of the first headphone housing and the second headphone housing.

In an implementation, the headband is foldable. When the headphone is in transportation or is accommodated, the headband can bend and fold to be accommodated in the headphone case, so that the space required for the headphone case to accommodate the headphone can be reduced, thereby reducing the size of the headphone case and facilitating collection and carrying of the headphone.

In an implementation, the headband includes a support plate and a chain strip fastened to the support plate. The support plate is made of an elastic material, for example, the support plate may be a steel sheet or a high-strength plastic part. The chain strip includes a plurality of sequentially connected chain links, and two adjacent chain links are rotatably connected to each other. When the headphone is worn by the user on the head, chain links disposed adjacent to each other can be adaptively adjusted based on a shape of the head of the user. In addition, a shape of the support plate is adaptively adjusted, so that the headband can better fit the head of the user, improving use comfort of the user.

In another implementation, the headband is made of an elastic material, for example, the headband may be a steel sheet or a high-strength plastic part, to ensure good structural stability of the headband to provide a specific clamping force for the headband, and improve comfort of the user wearing the headphone and applicability to different head types of users.

In an implementation, the first ear cover further includes a first processor. The first processor is located inside the first headphone housing, and is electrically connected to the first Bluetooth module and the first speaker, the first Bluetooth module is further configured to send a Bluetooth signal, the first processor is configured to convert the Bluetooth signal received by the first Bluetooth module into an audio signal, and send the audio signal, and the first speaker is configured to receive the audio signal sent by the first processor and play audio based on the audio signal sent by the first processor.

The second ear cover further includes a second processor. The second processor is located inside the second headphone housing, and is electrically connected to the second Bluetooth module and the second speaker, the second Bluetooth module is further configured to send a Bluetooth signal, the second processor is configured to convert the Bluetooth signal received by the second Bluetooth module into an audio signal, and send the audio signal, and the second speaker is configured to receive the audio signal sent by the second processor and play audio based on the audio signal sent by the second processor.

In an implementation, the first headphone housing includes an ear muff, an ear pad, and a bracket. The ear muff is made of a rigid material, to ensure good structural stability of the ear cover. The ear pad is fixedly connected to the ear muff. When the user wears the headphone, the ear pad abuts against the head of the user, and the ear muff is away from the head of the user. The ear pad is made of a flexible material, to improve use comfort when the user wears the headphone. The bracket is located between the ear muff and the ear pad, and is fixedly connected to the ear pad, and the first Bluetooth module and the first speaker are fastened to one side that is of the bracket and that is away from the ear pad. The bracket provides a support force for internal components of the ear cover, such as the first Bluetooth module and the first speaker, to prevent the internal components of the ear cover from shaking inside the first headphone housing, and to improve stability of the internal components of the ear cover inside the first headphone housing.

In an implementation, the bracket includes an outer surface facing the ear muff, the first speaker is fastened to a middle region of the outer surface of the bracket, and the first Bluetooth module is fastened to an edge region of the outer surface of the bracket.

In an implementation, the ear muff includes an inner surface facing the ear pad, the ear muff is provided with a clamping groove, and an opening of the clamping groove is located on the inner surface of the ear muff. The ear pad includes an outer surface facing the ear muff, the ear pad is provided with a clamping portion, the clamping portion protrudes on the outer surface of the ear pad, and the clamping portion is clamped in the clamping groove, so that the ear muff and the ear pad are fastened to each other.

In an implementation, the first headphone housing further includes a sealing ring, and the sealing ring is clamped between the ear muff and the ear pad, to improve sealing performance of the interior of the first headphone housing and effectively prevent the first ear cover from leaking sound. When the user uses the headphone in a noisy environment, sound can still be heard at a relatively low volume, thereby protecting auditory sense of the user.

In an implementation, a structure of the second headphone housing is the same as a structure of the first headphone housing. In other words, the second headphone housing includes an ear muff, an ear pad, and a bracket. The ear muff is made of a rigid material. The ear pad is made of a flexible material, and is fixedly connected to the ear muff. The bracket is located between the ear muff and the ear pad, and is fixedly connected to the ear pad. The second Bluetooth module and the second speaker are fastened to one side that is of the bracket of the second headphone housing and that is away from the ear pad of the second headphone housing.

In an implementation, the first ear cover further includes a first battery, the first battery is located inside the first headphone housing, and the first battery is electrically connected to the first Bluetooth module and the first speaker and is configured to supply power to the first Bluetooth module and the first speaker. The second ear cover further includes a second battery, the second battery is located inside the second headphone housing, and the second battery is electrically connected to the second Bluetooth module and the second speaker and is configured to supply power to the second Bluetooth module and the second speaker. Therefore, an external power source is not required to supply power to the headphone. This eliminates a constraint of a connection cable, and improves use comfort of the user.

In an implementation, a charging interface is disposed in the first headphone housing, and the charging interface of the first headphone housing is electrically connected to the first battery. The first battery may be charged by using a charging port of the first headphone housing, and there is no need to replace the first battery, thereby improving use convenience of the headphone.

A charging interface is disposed in the second headphone housing, and the charging interface of the second headphone housing is electrically connected to the second battery. The second battery may be charged by using a charging port of the second headphone housing, and there is no need to replace the second battery, thereby improving use convenience of the headphone.

According to a second aspect, this application provides a headphone assembly, including a headphone case and the foregoing headphone according to any one of the foregoing implementations. The headphone is detachably placed inside the headphone case. The headphone case can not only accommodate and protect the headphone, but also facilitate transportation and carrying of the headphone.

According to a third aspect, this application provides another headphone assembly, including a headphone case, and a first ear cover, a second ear cover, and a headband that are detachably placed inside the headphone case. The first ear cover includes a first headphone housing, and a first Bluetooth module and a first speaker that are located inside the first headphone housing, the first Bluetooth module is configured to receive a Bluetooth signal from a terminal, and the first speaker is configured to play audio based on the Bluetooth signal received by the first Bluetooth module. The second ear cover includes a second headphone housing, and a second Bluetooth module and a second speaker that are located inside the second headphone housing, the second Bluetooth module is configured to receive a Bluetooth signal from the terminal, and the second speaker is electrically connected to the second Bluetooth module and is configured to play audio based on the Bluetooth signal received by the second Bluetooth module. The first ear cover and the second ear cover are disposed opposite to each other, and the headband is disposed around the first ear cover and the second ear cover.

After the first ear cover, the second ear cover, and the headband are taken out of the headphone case, the headband can be detachably connected to the first headphone housing and the second headphone housing.

In the headphone assembly in this application, because the headband of the headphone can be detachably connected to the first headphone housing and the second headphone housing, when the headphone is in transportation or is accommodated, the first ear cover, the second ear cover, and the headband can be independently placed in the headphone case, so that a space required for the headphone case to accommodate the headphone can be reduced, thereby reducing a size of the headphone case and facilitating collection and carrying of the headphone assembly. In addition, after the first ear cover, the second ear cover, and the headband are taken out of the headphone case, the headband and each of the first ear cover and the second ear cover can be quickly assembled into a headphone for use.

In an implementation, the headphone case is in an elliptic cylindrical shape, to ensure appearance refinement of the headphone case. The first headphone housing includes an ear muff and an ear pad. The ear muff is made of a rigid material. The ear pad is made of a flexible material, and is fixedly connected to the ear muff. A structure of the second headphone housing is the same as a structure of the first headphone housing. The first ear cover and the second ear cover are located in a middle portion of the headphone case, an ear pad of the first ear cover and an ear pad of the second ear cover are disposed opposite to each other, the ear muff of the first ear cover and the ear muff of the second ear cover are disposed back to back, and the headband is disposed around an edge of the headphone case. In this case, the first ear cover and the second ear cover are located in a region with a relatively large width inside the headphone case, so that full utilization of a space inside the headphone case can be implemented.

In an implementation, the headphone case includes a housing and a battery located inside the housing. The first ear cover further includes a first battery. The first battery is located inside the first headphone housing, is electrically connected to the first Bluetooth module and the first speaker, and is configured to supply power to the first Bluetooth module and the first speaker. The second ear cover further includes a second battery. The second battery is located inside the second headphone housing, is electrically connected to the second Bluetooth module and the second speaker, and is configured to supply power to the second Bluetooth module and the second speaker.

The first ear cover, the second ear cover, and the headband are placed inside the housing, and the first battery and the second battery are electrically connected to the battery of the headphone case. In this case, the battery of the headphone case can charge the first battery and the second battery, to prolong endurance time of the headphone.

The battery of the headphone case may charge the first battery and the second battery by using an electrically connected pin needle or in a wireless charging manner.

In an implementation, a charging socket is disposed in the housing, and the charging socket of the housing is electrically connected to the battery of the headphone, so that the battery of the headphone case can be charged by using a charging port of the housing, and there is no need to detach and replace the battery of the headphone case, thereby improving use convenience of the headphone case.

### BRIEF DESCRIPTION OF DRAWINGS

To describe technical solutions in embodiments of this application or in the background more clearly, the following describes the accompanying drawings used in embodiments of this application or in the background.
FIG. 1 is a schematic diagram of a structure of a headphone according to an embodiment of this application;
FIG. 2 is a schematic diagram of a cross-section structure of the headphone, cut in a direction I-I, shown in FIG. 1;
FIG. 3 is a schematic diagram of a structure of a headband in the headphone shown in FIG. 1;
FIG. 4 is a schematic diagram of a breakdown structure of the headband shown in FIG. 3;
FIG. 5 is a schematic diagram of a structure of a chain link in a chain strip shown in FIG. 4;
FIG. 6 is a schematic diagram of a structure of the chain link shown in FIG. 5 at another angle;
FIG. 7 is a schematic diagram of a structure of assembling two adjacent chain links in a chain strip shown in FIG. 3;
FIG. 8 is a schematic diagram of a structure of a first ear cover in the headphone shown in FIG. 1;
FIG. 9 is a schematic diagram of a breakdown structure of the first ear cover shown in FIG. 8;
FIG. 10 is a schematic diagram of a structure of an ear muff in the first ear cover shown in FIG. 9;
FIG. 11 is a schematic diagram of a structure of the ear muff, cut in a direction II-II, shown in FIG. 10;
FIG. 12 is a schematic diagram of a structure of assembling an ear pad and a bracket in the first ear cover shown in FIG. 9;
FIG. 13 is a schematic diagram of a breakdown structure of the structure shown in FIG. 12;
FIG. 14 is a schematic diagram of a structure of the structure, cut in a direction III-III, shown in FIG. 12;
FIG. 15 is a schematic diagram of a structure of the first ear cover, cut in a direction IV-IV, shown in FIG. 8;
FIG. 16 is a schematic diagram of a structure of the first ear cover shown in FIG. 8 in another state; and
FIG. 17 is a schematic diagram of a structure of a headphone assembly according to an embodiment of this application.

### DESCRIPTION OF EMBODIMENTS

The following describes embodiments of this application with reference to the accompanying drawings in embodiments of this application.

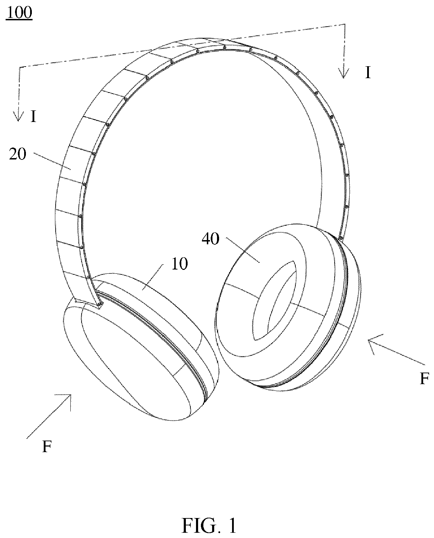

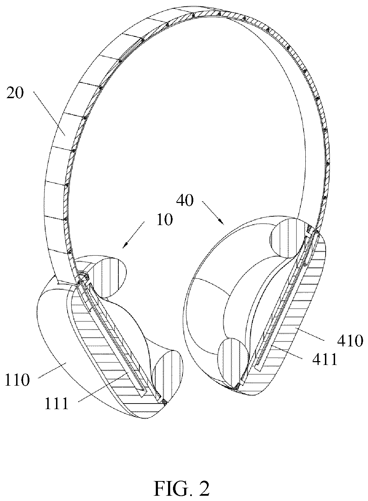

Refer to FIG. 1 and FIG. 2. FIG. 1 is a schematic diagram of a structure of a headphone 100 according to an embodiment of this application. FIG. 2 is a schematic diagram of a structure of the headphone 100, cut in a direction I-I, shown in FIG. 1. "Cut in the direction I-I" means cutting along a line I-I and a plane on which arrows at two ends of the I-I line are located. Descriptions of the accompanying drawings are the same in the following.

The headphone 100 includes two ear covers (10, 40) and a headband 20 connected between the two ear covers 10. The two ear covers are respectively a first ear cover 10 and a second ear cover 40.

In this embodiment, the headphone 100 is an over-ear headphone. When a user wears the headphone 100, the headband 20 exerts a force F to an inner side of the headphone 100, so that the two ear covers (10, 40) respectively abut on a left side and a right side of the head of the user. The first ear cover 10 abuts on the left side of the head of the user and surrounds the left ear of the user; and the second ear cover 40 abuts on the right side of the head of the user and surrounds the right ear of the user. In this case, the two ear covers (10, 40) may form sealing on a portion around the ear of the user, reduce a phenomenon of sound leakage when the headphone 100 plays audio, and improve sound quality of the headphone 100.

It should be noted that, in another embodiment, the headphone 100 may alternatively be an on-ear headphone. When the user wears the headphone 100, the two ear covers (10, 40) respectively abut on the left ear and the right ear of the user, to form sealing on the ears of the user. The first ear cover 10 abuts on the left ear of the user, and the second ear cover 40 abuts on the right ear of the user.

Both the first ear cover 10 and the second ear cover 40 are over-ear covers. In this embodiment, structures of the first ear cover 10 and the second ear cover 40 are the same, to simplify a process of the two ear covers (10, 40) in the headphone 100. Specifically, the first ear cover 10 includes a first headphone housing 110. The first headphone housing 110 is provided with a first fastening groove 111, and an opening of the first fastening groove 111 is located on a surface of the first headphone housing 110. The opening of the first fastening groove 111 is located on a circumferential surface of the first headphone housing 110. The second ear cover 40 includes a second headphone housing 410. The second headphone housing 410 is provided with a second fastening groove 411, and an opening of the second fastening groove 411 is located on a surface of the second headphone housing 410. The opening of the second fastening groove 411 is located on a circumferential surface of the second headphone housing 410. It should be noted that, in another embodiment, structures of the two ear covers (10, 40) may alternatively be different. This is not specifically limited in this application.

The first ear cover 10 and the second ear cover 40 are symmetrically distributed relative to the headband 20, to improve appearance refinement of the headphone 100. In this embodiment, the headband 20 is detachably connected to the first ear cover 10 and the second ear cover 40. Specifically, two ends of the headband 20 are respectively connected to the first headphone housing 110 and the second headphone housing 410. The headband 20 is detachably connected to the first headphone housing 110 and the second headphone housing 410. When the headphone 100 is in transportation or is accommodated, the two ear covers (10, 40) and the headband 20 can be rapidly detached. The detached two ear covers (10, 40) and headband 20 can be independently placed in a headphone case, so that a space required for the headphone case to accommodate the headphone 100 can be reduced, thereby reducing a size of the headphone case, and facilitating collection and carrying of the headphone 100.

In addition, the headband 20 is foldable. When the headphone 100 is in transportation or is accommodated, the headband 20 can be bent and folded to be accommodated in the headphone case, so that the space required for the headphone case to accommodate the headphone 100 is further reduced, thereby reducing the size of the headphone case.

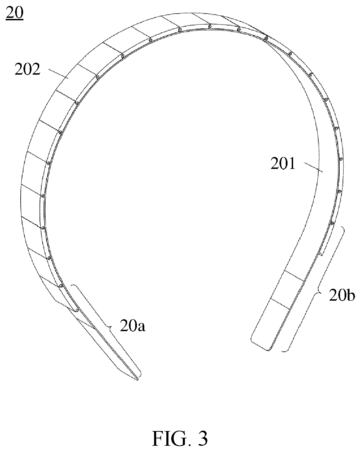

Referring to FIG. 2 and FIG. 3, FIG. 3 is a schematic diagram of a structure of the headband 20 in the headphone 100 shown in FIG. 1.

The headband 20 is in a hair hoop shape. When the user wears the headphone 100, the headband 20 in the hair hoop shape can better fit the head of the user, thereby improving use comfort of the user. The headband 20 includes an inner surface 201 and an outer surface 202 that are disposed back to back, and the inner surface 201 and the outer surface 202 of the headband 20 are disposed in parallel. When the user wears the headphone 100, the inner surface 201 of the headband 20 faces the head of the user, and contacts the head of the user; and the outer surface 202 of the headband 20 is away from the head of the user.

The inner surface 201 of the headband 20 is an arc surface. When the headphone 100 is worn by the user on the head, the inner surface 201 of the headband 20 may better fit the head of the user, so that a problem that the headband 20 may abut on the head of the user is avoided, thereby improving comfort when the user wears the headphone 100.

It should be understood that orientation words such as "inner" and "outer" that are used for the headphone 100 shown in this embodiment are mainly described based on orientations when the headphone 100 is worn by the user on the head. When the headphone 100 is worn by the user, an orientation close to the head of the user is "inner", and an orientation away from the head of the user is "outer". This does not constitute a limitation on an orientation of the headphone 100 in another scenario.

Specifically, the headband 20 includes a first end portion 20a and a second end portion 20b that are disposed opposite to each other. The first end portion 20a is located in the first fastening groove 111, and is in an interference fit with the first fastening groove 111; and the second end portion 20b is located in the second fastening groove 411, and is in an interference fit with the second fastening groove 411, to implement a detachable connection between the two ear covers (10, 40) and the headband 20, so that the two ear covers (10, 40) and the headband 20 can be easily detached or assembled. When the user wears the headphone 100, a shape of the headband 20 may be adjusted by adjusting lengths of the first end portion 20a and the second end portion 20b respectively extending into the first fastening groove 111 and the second fastening groove 411, until the headband 20 can adapt to the head of the user, so that the headphone 100 can be better worn on the head of the user.

It should be noted that, in another embodiment, a detachable connection may alternatively be implemented between the first end portion 20a and the first headphone housing 110 in a magnetic attraction or buckle manner, and a detachable connection may alternatively be implemented between the second end portion 20b and the second headphone housing 410 in a magnetic attraction or buckle manner. This is not specifically limited in this application.

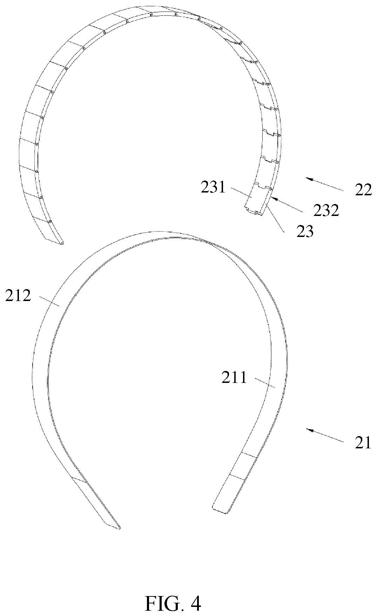

Referring to FIG. 3 and FIG. 4, FIG. 4 is a schematic diagram of a breakdown structure of the headband 20 shown in FIG. 3.

The headband 20 includes a support plate 21 and a chain strip 22 fastened to the support plate 21. In this embodiment, the support plate 21 is in a hair hoop shape. The support plate 21 includes an inner surface 211 and an outer surface 212 that are disposed back to back, and the inner surface 211 and the outer surface 212 of the support plate 21 are disposed in parallel. The inner surface 211 of the support plate 21 is the inner surface 201 of the headband 20.

In addition, the support plate 21 may be made of an elastic material, for example, the support plate 21 may be a steel sheet or a high-strength plastic part. This ensures that the support plate 21 has good structural stability to support the chain strip 22, and has toughness to provide a specific clamping force for the headband 20, thereby improving comfort when the user wears the headphone 100 and applicability to different head types of users.

The chain strip 22 is fastened to the outer surface 212 of the support plate 21. The chain strip 22 covers a partial portion of the outer surface 212 of the support plate 21, and exposes two ends of the support plate 21. For example, the chain strip 22 may be mounted on the outer surface 212 of the support plate 21 in a bonding manner. For example, the headband 20 may include a bonding layer (not shown in the figure), and the bonding layer is bonded between the chain strip 22 and the outer surface 212 of the support plate 21. In this case, two end portions of the chain strip 22 form the first end portion 20a and the second end portion 20b of the headband 20 respectively with two end portions of the support plate 21.

In this embodiment, the chain strip 22 includes a plurality of sequentially connected chain links 23. The chain link 23 may be made of a metal material such as stainless steel, titanium, or a titanium alloy. This can not only improve appearance refinement of the chain strip 22, but also process the chain link 23 through different surface processes, thereby diversifying the appearance of the chain strip 22 and facilitating a personalized design of the chain strip 22. It may be understood that, in another embodiment, the chain link 23 may alternatively be made of plastic or another non-metal material. It should be understood that a plurality of chain links 23 mean that a quantity of chain links 23 may be two or more than two.

Each chain link 23 includes an inner surface 231 and an outer surface 232 that are disposed back to back. The inner surface 231 of each chain link 23 may be an arc-shaped surface, so that the chain link 23 can be better attached to the outer surface 212 of the support plate 21, to increase a contact area between the chain link 23 and the support plate 21, thereby improving connection stability between the chain link 23 and the support plate 21. Outer surfaces 232 of the plurality of chain links 23 form the outer surface 202 of the headband 20. Shapes of the outer surfaces 232 of the plurality of chain links 23 may be the same, to ensure appearance consistency of the chain strip 22 and improve appearance refinement of the chain strip 22.

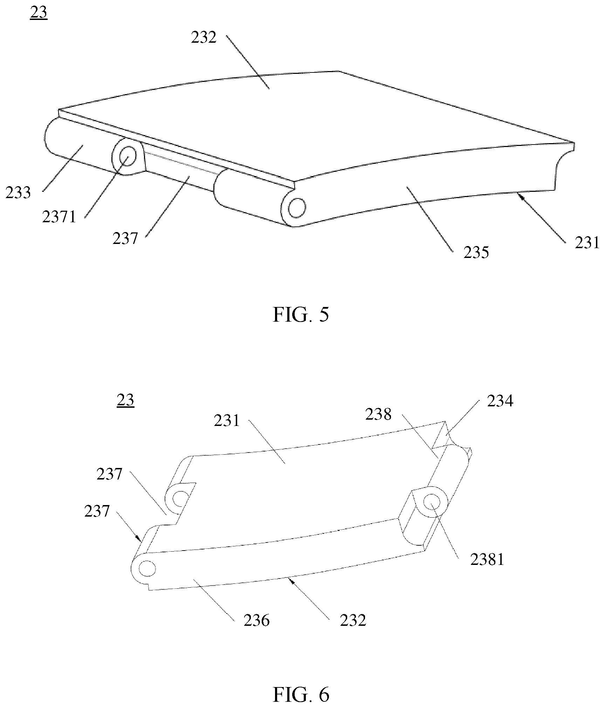

Refer to FIG. 5 and FIG. 6. FIG. 5 is a schematic diagram of a structure of the chain link 23 in the chain strip 22 shown in FIG. 4. FIG. 6 is a schematic diagram of a structure of the chain link 23 shown in FIG. 5 at another angle.

The chain link 23 further includes a circumferential surface (not shown in the figure) connected between the outer surface 232 and the inner surface 231. The circumferential surface of the chain link 23 includes a left circumferential surface 233 and a right circumferential surface 234 that are disposed back to back, and a front circumferential surface 235 and a rear circumferential surface 236 that are connected between the left circumferential surface 233 and the right circumferential surface 234. The front circumferential surface 235 and the rear circumferential surface 236 are disposed back to back. It should be understood that orientation words such as "left", "right", "front", and "rear" that are used herein are mainly described based on an orientation shown in FIG. 5. This does not constitute a limitation on an orientation of the chain link 23 in another scenario.

The chain link 23 includes a mounting groove 237, and an opening of the mounting groove 237 is located on the left circumferential surface 233 of the chain link 23. Specifically, the opening of the mounting groove 237 is located in a middle region of the left circumferential surface 233 of the chain link 23. A recessed direction of the mounting groove 237 is a direction that is of the left circumferential surface 233 of the chain link 23 and that faces the right circumferential surface 234, and the mounting groove 237 penetrates through the inner surface 231 of the chain link 23. The mounting groove 237 includes two groove sidewalls (not marked in the figure) that are disposed opposite to each other, and each groove sidewall is partially recessed to form a mounting hole 2371.

The chain link 23 further includes a mounting portion 238, and the mounting portion 238 is connected to the right circumferential surface 234 of the chain link 23. Specifically, the mounting portion 238 is connected to a middle portion of the right circumferential surface 234 of the chain link 23, and an extension direction of the mounting portion 238 is a direction that is of the right circumferential surface 233 of the chain link 23 and that is away from the left circumferential surface 234. The mounting portion 238 includes a front circumferential surface (not marked in the figure) that is in a same direction as the front circumferential surface 235 of the chain link 23, a rear circumferential surface (not marked in the figure) that is disposed back to back with the front circumferential surface, and an inner surface (not marked in the figure) that is connected between the front circumferential surface and the rear circumferential surface. The inner surface of the mounting portion 238 is in a same direction as the inner surface 231 of the chain link 23, and is located on a same surface as the inner surface 231 of the chain link 23, to increase a lamination area between the chain link 23 and the support plate 21, thereby improving mounting stability between the chain link 23 and the support plate 21.

The mounting portion 238 is provided with a through hole 2381, and an opening of the through hole 2381 is located on the front circumferential surface of the mounting portion 238. An extension direction of the through hole 2381 of the mounting portion 238 is a direction that is of the front circumferential surface of the mounting portion 238 and that faces the rear circumferential surface, and penetrates through the rear circumferential surface of the mounting portion 238.

Next, for ease of understanding, a connection manner between two chain links 23 is used as an example, and a connection manner between two adjacent chain links 23 in the chain strip 22 is described in detail.

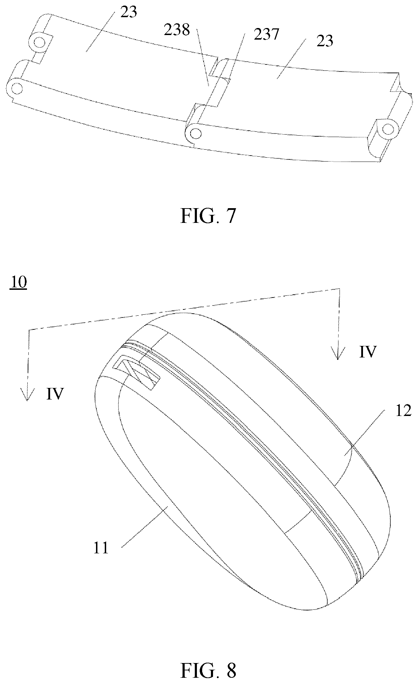

FIG. 7 is a schematic diagram of a structure of assembling two adjacent chain links 23 in the chain strip 22 shown in FIG. 3.

The two chain links 23 are rotatably connected to each other. Specifically, the mounting portion 238 of one chain link 23 is rotatably connected to the mounting groove 237 of the other chain link 23. The mounting portion 238 and the mounting groove 237 may be rotatably connected to each other by using a spring bar (not shown in the figure). When the two chain links 23 are assembled, the spring bar is first fastened to a through hole (not shown in the figure) of the mounting portion 238. In this case, two spring bar ends of the spring bar respectively protrude from the front circumferential surface and the rear circumferential surface of the mounting portion 238. The two spring bar ends are pinched to make a length of the spring bar shorter. Then, the mounting portion 238 is enabled to extend into the mounting groove 237. The two spring bar ends are released. The two spring bar ends are separately inserted into mounting holes (not shown in the figure) of the mounting groove 237, to implement assembly of the two chain links 23. It should be understood that, in another embodiment, the connection between the two chain links 23 may be implemented by not using the spring bar, or the rotatable connection between the two chain links 23 may be implemented by using another rotating shaft mechanism. This is not specifically limited in this application.

When the headphone 100 is worn by the user on the head, chain links 23 disposed adjacent to each other can be adaptively adjusted based on a shape of the head of the user. In addition, a shape of the support plate 21 is adaptively adjusted, so that the headband 20 can better fit the head of the user, improving use comfort of the user. In addition, a rotatable connection between the two adjacent chain links 23 may be implemented only by using the spring bar, and no additional rotation mechanism is needed to implement connection between the two chain links 23. This not only reduces costs of the chain strip 22, but also avoids impact of existence of the rotation mechanism on appearance refinement of the chain strip 22, improving aesthetics of the chain strip 22. It should be understood that a rotatable connection between adjacent chain links 23 may be implemented by using a structure such as a spring bar or a rotating shaft mechanism. This is not specifically limited in this application.

It should be understood that, in another embodiment, the headband 20 may be made of an elastic material. For example, the headband 20 is a spring sheet or a high-strength plastic part, to ensure good structural stability of the headband 20 and provide a specific clamping force for the headband 20, and improve comfort of the user wearing the headphone 100 and applicability to different head types of users. This is not specifically limited in this application.

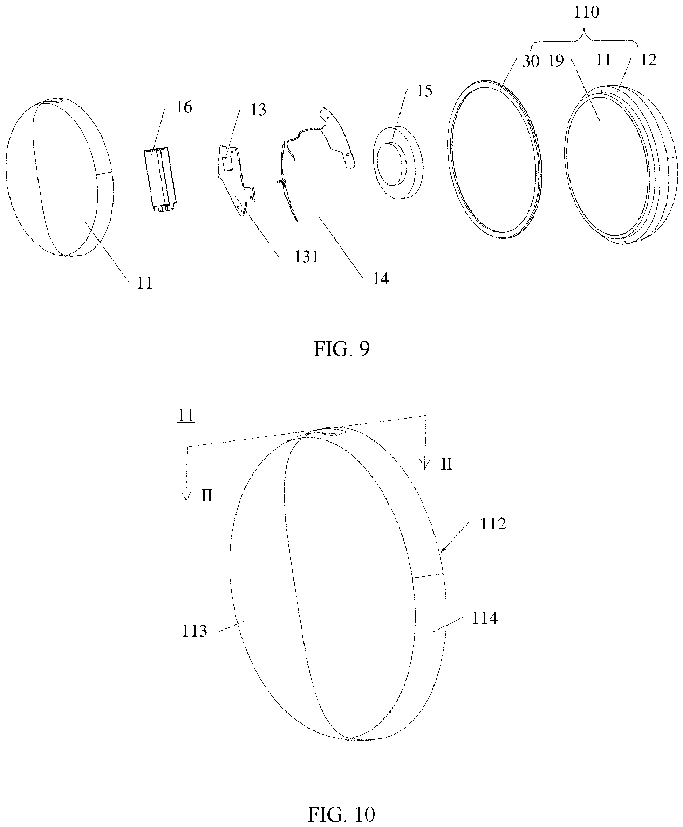

Refer to FIG. 8 and FIG. 9. FIG. 8 is a schematic diagram of a structure of the first ear cover 10 in the headphone 100 shown in FIG. 1. FIG. 9 is a schematic diagram of a breakdown structure of the first ear cover 10 shown in FIG. 8.

The first ear cover 10 further includes a first circuit board 13, a first Bluetooth module 14, a first speaker 15, and a first battery 16. The first circuit board 13, the first Bluetooth module 14, the first speaker 15, and the first battery 16 are all located inside the first headphone housing 110. The first headphone housing 110 includes an ear muff 11 and an ear pad 12 that is fixedly connected to the ear muff 11. When the user wears the headphone 100, the ear muff 11 is far away from the head of the user, and the ear pad 12 abuts on the head of the user and surrounds the ear of the user.

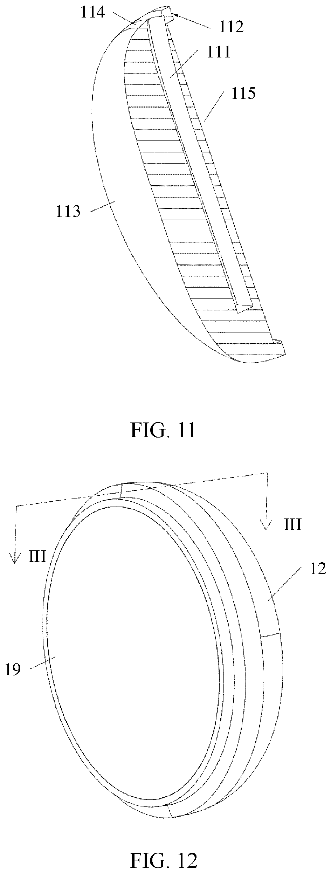

Refer to FIG. 10 and FIG. 11. FIG. 10 is a schematic diagram of a structure of the ear muff 11 in the first ear cover 10 shown in FIG. 9. FIG. 11 is a schematic diagram of a structure of the ear muff 11, cut in a direction II-II, shown in FIG. 10.

In this embodiment, the ear muff 11 is made of a rigid material, for example, the ear muff 11 may be made of polycarbonate or polymethyl methacrylate, to ensure good structural stability of the first ear cover 10. Specifically, the ear muff 11 includes an inner surface 112 and an outer surface 113 that are disposed back to back and a circumferential surface 114 connected between the inner surface 112 and the outer surface 113. The inner surface 112 of the ear muff 11 is a surface that is of the ear muff 11 and that faces the ear pad 12, and the outer surface 113 of the ear muff 11 is a surface that is of the ear muff 11 and that is away from the ear pad 12. The first fastening groove 111 is disposed on the ear muff 11, and the opening of the first fastening groove 111 is located on a circumferential surface 114 of the ear muff 11.

In addition, the ear muff 11 is provided with a clamping groove 115, and an opening of the clamping groove 115 is located on the inner surface 112 of the ear muff 11. The opening of the clamping groove 115 is located in a middle region of the inner surface 112 of the ear muff 11, and a recessed direction of the clamping groove 115 is a direction that is of the inner surface 112 of the ear muff 11 and that faces the outer surface 113.

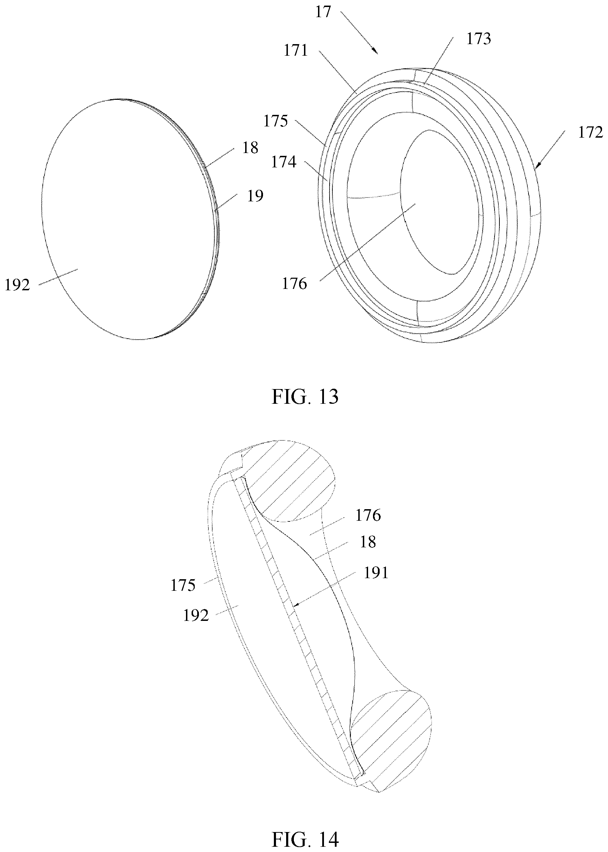

Refer to FIG. 12 and FIG. 13. FIG. 12 is a schematic diagram of a structure of assembling the ear pad 12 and a bracket 19 in the first ear cover 10 shown in FIG. 9. FIG. 13 is a schematic diagram of a breakdown structure of the structure shown in FIG. 12.

In this embodiment, the ear pad 12 is an over-ear pad. The ear pad 12 is made of a flexible material, for example, the ear pad 12 is made of foam, to improve use comfort when the user wears the headphone 100.

The ear pad 12 includes an elastic body 17 and a mesh fabric 18 mounted on the elastic body 17. Specifically, the elastic body 17 is circular. The elastic body 17 may be made of a flexible material such as foam. When the user wears the headphone 100, the elastic body 17 contacts the head of the user, and is disposed around the ear of the user. The elastic body 17 may be slightly deformed to form sealing of the ear cover 10 on a portion around the ear of the user, to reduce sound leakage of the headphone 100. This can improve sound quality of the headphone 100, and audio can be played with a relatively low volume when the user uses the headphone 100 in a noisy environment, thereby protecting auditory sense of the user.

The elastic body 17 includes an outer surface 171 facing the ear muff 11 and an inner surface 172 that is disposed back to back with the outer surface 171. The outer surface 171 of the elastic body 17 is an outer surface of the ear pad 12. The elastic body 17 has a clamping portion 173 and a fastening groove 174. The clamping portion 173 protrudes on the outer surface 171 of the elastic body 17. Specifically, the clamping portion 173 protrudes in a middle region of the outer surface 171 of the elastic body 17, and an extension direction of the clamping portion 173 is a direction that is of the outer surface 171 of the elastic body 17 and that is away from the inner surface 172. The clamping portion 173 includes an outer surface 175 that is in a same direction as the outer surface 171 of the elastic body 17. An opening of the fastening groove 174 is located on the outer surface 175 of the clamping portion 173. The opening of the fastening groove 174 is located in a middle region of the outer surface 175 of the clamping portion 173.

The elastic body 17 further has a receiving hole 176, and an opening of the receiving hole 176 is located on the inner surface 172 of the elastic body 17. Specifically, the opening of the receiving hole 176 is located in a middle region of the inner surface 172 of the elastic body 17. An extension direction of the receiving hole 176 is a direction that is of the inner surface 172 of the elastic body 17 and that faces the outer surface 175, and the receiving hole 176 penetrates through a groove bottom wall of the fastening groove 174. When the user wears the headphone 100, the elastic body 17 contacts the head of the user, and the ear of the user is received in the receiving hole 176, so that the elastic body 17 is disposed around the ear of the user.

FIG. 14 is a schematic diagram of a structure of the structure, cut in a direction III-III, shown in FIG. 12.

The headphone housing 110 further includes a bracket 19. The bracket 19 is located between the ear muff 11 and the ear pad 12, and is fixedly connected to the ear pad 12. The bracket 19 includes an inner surface 191 and an outer surface 192 that are disposed back to back, and the mesh fabric 18 is mounted on the inner surface 191 of the bracket 19. Specifically, the bracket 19 is mounted in the fastening groove 174 of the elastic body 17. In this case, the outer surface 192 of the bracket 19 is in a same direction as the outer surface 175 of the clamping portion 173, and may be flush with the outer surface 175 of the clamping portion 173. A portion of the mesh fabric 18 is located in the fastening groove 174, and a portion of the mesh fabric 18 is located in the receiving hole 176.

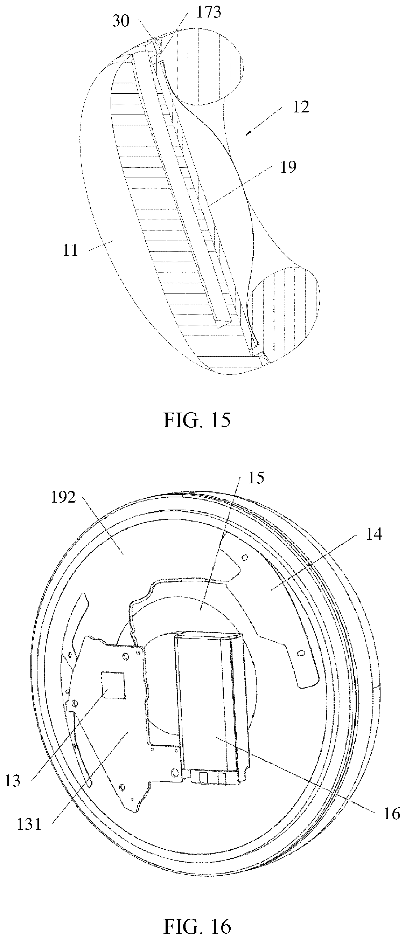

FIG. 15 is a schematic diagram of a structure of the first ear cover 10, cut in a direction IV-IV, shown in FIG. 8.

The ear pad 12 is fixedly connected to the ear muff 11. The ear pad 12 and the ear muff 11 are enclosed to form an inside of the first headphone housing 110. Specifically, the clamping portion 173 of the ear pad 12 is clamped in the clamping groove 115 of the ear muff 11, that is, the clamping groove 115 of the ear muff 11 and the clamping portion 173 of the ear pad 12 are clamped to each other, so that the ear muff 11 and the ear pad 12 are relatively fastened to each other. In this case, the ear muff 11 and the bracket 19 are enclosed to form the inside of the first headphone housing 110.

In addition, the first headphone housing 110 further includes a sealing ring 30, and the sealing ring 30 is clamped between the ear muff 11 and the ear pad 12. Specifically, the sealing ring 30 is sleeved on an outer circumferential surface of the clamping portion 173 of the ear pad 12, and is clamped between the inner surface 112 of the ear muff 11 and the outer surface 113 of the elastic body 17, to seal the ear cover 10. This can not only reduce sound output interference caused by external noise to the headphone 100, but also reduce sound leakage, thereby improving sound output quality of the headphone 100.

FIG. 16 is a schematic diagram of a structure of the first ear cover 10 shown in FIG. 8 in another state. The ear muff 11 of the first ear cover 10 in FIG. 16 is not shown.

The first circuit board 13, the first Bluetooth module 14, the first speaker 15, and the first battery 16 are all located inside the ear muff 11. An inside of the ear muff 11 is an inside of the headphone housing 110. Specifically, the first circuit board 13, the first Bluetooth module 14, the first speaker 15, and the first battery 16 are all fastened on one side that is of the bracket 19 and that is away from the ear pad 12. That is, the first circuit board 13, the first Bluetooth module 14, the first speaker 15, and the first battery 16 are all fastened on one side that is of the bracket 19 and that faces the ear muff 11.

The first Bluetooth module 14 and the first speaker 15 are mounted on the outer surface 192 of the bracket 19. Specifically, the first Bluetooth module 14 is mounted on an edge of the outer surface 192 of the bracket 19. The Bluetooth module 14 may also be referred to as a Bluetooth receiver. In this embodiment, the first Bluetooth module 14 is two Bluetooth antennas, and the two Bluetooth antennas are mounted at intervals on the edge of the outer surface 192 of the bracket 19, to increase an area of receiving a Bluetooth signal by the first Bluetooth module 14. In another embodiment, the first Bluetooth module 14 may be mounted on the first circuit board 13, in other words, the first circuit board 13 is a circuit board integrated with the first Bluetooth module 14. This is not specifically limited in this application.

The first Bluetooth module 14 is communicatively connected to a terminal, and is configured to receive or send a Bluetooth signal from or to the terminal. It should be understood that the terminal may be an electronic product that may send and receive the Bluetooth signal, such as a mobile phone, a tablet computer, a laptop computer, an in-vehicle infotainment, a sales point terminal, a Walkman, a smart band, a smart watch, an augmented reality device, or a virtual reality device.

The first speaker 15 is mounted in a middle region of the outer surface 192 of the bracket 19, and is electrically connected to the first Bluetooth module 14. Specifically, the first speaker 15 is a loudspeaker and is located between the two Bluetooth antennas, and is configured to play audio based on the Bluetooth signal received by the first Bluetooth module 14.

In this embodiment, the first ear cover 10 further includes a first processor 131. The first processor 131 is located inside the first headphone housing 110, and is electrically connected to the first Bluetooth module 14 and the first speaker 15. Specifically, the first processor 131 is mounted on the first circuit board 13, and is electrically connected to the first Bluetooth module 14 and the first speaker 15 by using the first circuit board 13. The first processor 131 is configured to convert the Bluetooth signal received by the first Bluetooth module 14 into an audio signal, and send the audio signal. The first speaker 15 is configured to receive the audio signal sent by the first processor 131, and play audio based on the audio signal sent by the first processor 131. The two Bluetooth antennas of the first Bluetooth module 14 are separately electrically connected to the first circuit board 13 by using wires (not marked in the figure).

The first battery 16 is electrically connected to the first Bluetooth module 14 and the first speaker 15, and is configured to supply power to the first Bluetooth module 14 and the first speaker 15, so that power does not need to be supplied to the first ear cover 10 by using an external power source. This eliminates a constraint of a connection cable between the first ear cover 10 and the external power source, and improves use comfort of the user.

In addition, the first battery 16 is a rechargeable battery. In this case, a charging interface (not shown in the figure) may be disposed in the first headphone housing 110, and the charging interface of the first headphone housing 110 is electrically connected to the first battery 16, so that the first ear cover 10 can directly charge the first battery 16 by using the charging interface, and the first battery 16 does not need to be detached and replaced, thereby improving use convenience of the headphone 100.

In this embodiment, structures of the second ear cover 40 and the first ear cover 10 are the same. For example, the second ear cover 40 further includes a second circuit board, a second Bluetooth module, a second speaker, and a second battery. The second circuit board, the second Bluetooth module, the second speaker, and the second battery are all located inside the second headphone housing 410.

A structure of the second headphone housing 410 is the same as a structure of the first headphone housing 110. That is, the second headphone housing includes an ear muff, an ear pad, and a bracket. The ear muff is made of a rigid material. The ear pad is made of a flexible material, and is fixedly connected to the ear muff. The bracket is located between the ear muff and the ear pad, and is fixedly connected to the ear pad.

The second circuit board, the second Bluetooth module, the second speaker, and the second battery are all fastened to one side that is of the bracket of the second headphone housing 410 and that is away from the ear pad of the second headphone housing 410. The second Bluetooth module is communicatively connected to the terminal, and is configured to receive or send a Bluetooth signal from or to the terminal. The second Bluetooth module and the first Bluetooth module 14 may be communicatively connected to the same terminal, and receive a Bluetooth signal from the terminal at the same time. The second speaker is electrically connected to the second Bluetooth module and is configured to play audio based on the Bluetooth signal received by the second Bluetooth module.

In addition, the second ear cover 40 further includes a second processor, and the second processor is located inside the second headphone housing 410, and is electrically connected to the second Bluetooth module and the second speaker. Specifically, the second processor is mounted on the second circuit board, and is electrically connected to the second Bluetooth module and the second speaker by using the second circuit board. The second processor is configured to convert the Bluetooth signal received by the second Bluetooth module into an audio signal, and send the audio signal. The second speaker is configured to receive the audio signal sent by the second processor, and play audio based on the audio signal sent by the second processor.

The second battery is electrically connected to the second Bluetooth module and the second speaker, and is configured to supply power to the second Bluetooth module and the second speaker, so that power does not need to be supplied to the second ear cover 40 by using an external power source. This eliminates a constraint of a connection cable between the second ear cover 40 and the external power source, and improves use comfort of the user.

In addition, the second battery is a rechargeable battery. In this case, a charging interface (not shown in the figure) may be disposed in the second headphone housing 410, and the charging interface of the second headphone housing 410 is electrically connected to the second battery, so that the second ear cover 40 can directly charge the second battery by using the charging interface, and the second battery does not need to be detached and replaced, thereby improving use convenience of the headphone 100.

It should be noted that another structure of the second ear cover 40 is basically the same as another structure of the second ear cover 10. References may be made to FIG. 9 to FIG. 16, and details are not described herein again.

In the headphone 100 shown in this embodiment, both the first ear cover 10 and the second ear cover 40 include a Bluetooth module, and both the first ear cover 10 and the second ear cover 40 may be independently connected to a terminal device such as a mobile phone. When the user plays audio by using the headphone 100, the first ear cover 10 and the second ear cover 40 can synchronously receive the Bluetooth signal from the terminal, and play audio synchronously based on the Bluetooth signal, so that a problem that a relative playback delay between the first ear cover 10 and the second ear cover 40 is avoided, thereby improving real-time transmission of the headphone 100.

In addition, both the first ear cover 10 and the second ear cover 40 can be independently connected to the terminal device. Therefore, a line that is electrically connected between the first ear cover 10 and the second ear cover 40 does not need to be disposed in the headband 20, so that the headband 20 and each of the first ear cover 10 and the second ear cover 40 can be detached. When the detached first ear cover 10, second ear cover 40, and headband 20 are accommodated in the headphone case, the first ear cover 10, the second ear cover 40, and the headband 20 can be more fit, so that the first ear cover 10, the second ear cover 40, and the headband 20 can be placed in a smaller headphone case, and a space required to accommodate the headphone 100 can be reduced, thereby facilitating transportation and accommodation of the headphone 100.

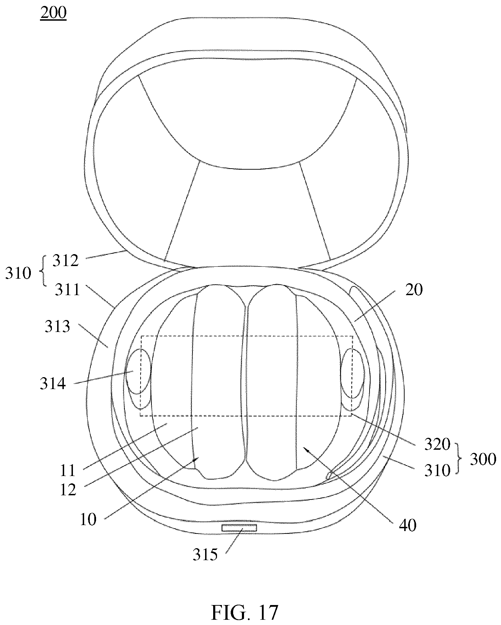

FIG. 17 is a schematic diagram of a structure of a headphone assembly 200 according to an embodiment of this application.

The headphone assembly 200 includes a headphone case 300, and a first ear cover 10, a second ear cover 40, and a headband 20 that are detachably placed inside the headphone case 300. The first ear cover 10 and the second ear cover 40 are disposed opposite to each other, and the headband 20 is disposed around the first ear cover 10 and the second ear cover 40. The first ear cover 10 is the first ear cover 10 shown in the foregoing headphone 100, the second ear cover 40 is the second ear cover 40 shown in the foregoing headphone 200, and the headband 20 is the headband 20 shown in the foregoing headphone 100. In this case, each of the first ear cover 10 and the second ear cover 40 and the headband 20 are in a detached state. After the first ear cover 10, the second ear cover 40, and the headband 20 are taken out of the headphone case 300, the headband 20 can be detachably connected to a first headphone housing 110 and a second headphone housing 410, to form the foregoing headphone 100.

In this embodiment, the headphone case 300 is in an elliptic cylindrical shape, to ensure appearance refinement of the headphone case 300. The headphone case 300 includes a housing 310 and a battery 320 located inside the housing 310. The housing 310 includes a body 311 and a cover 312 rotatably connected to the body 311. The housing 310 shown in FIG. 17 is in an unfolded state. In addition, the headphone case 300 may alternatively be in a closed state, and in this case, the cover 312 covers the body 311, to implement accommodation and protection of the ear cover 10 and the headband 20. The body 311 includes a top surface 313 facing the cover 312. The body 311 is provided with two charging columns 314. The two charging columns 314 are electrically connected to the battery 312, and protrude from the top surface 313 of the body 311.

The battery 320 is located inside the body 311. The battery 320 is a rechargeable battery. A charging socket 315 is disposed in the housing 310, and the charging socket 315 is electrically connected to the battery 320, so that the battery 320 can be charged by using the charging socket 315, and there is no need to detach and replace the battery 320, thereby improving use convenience of the headphone case 300.

The first ear cover 10 and the second ear cover 40 are located in a middle portion of the headphone case 300, and the headband 20 is disposed around an edge of the headphone case 300. In other words, two ear covers 10 are placed in a region with a relatively large width inside the headphone case 300, so that full utilization inside the headphone case 300 can be implemented, thereby reducing a size of the headphone case 300. In this embodiment, the first ear cover 10, the second ear cover 40, and the headband 20 are placed inside the housing 310. The first ear cover 10, the second ear cover 40, and the headband 20 are all placed on the top surface 313 of the body 311. Specifically, the first ear cover 10 and the second ear cover 40 are placed in a middle region of the top surface 313 of the body 311, and are located between the two charging columns 314. An ear pad 12 of the first ear cover 10 and an ear pad of the second ear cover 40 are disposed opposite to each other, and an ear muff 11 of the first ear cover 10 and an ear muff of the second ear cover 40 are disposed back to back. The headband 20 is placed in an edge region of the top surface 313 of the body 311, and is disposed around the first ear cover 10, the second ear cover 40, and the two charging columns 314, and may be partially foldable.

A first battery and a second battery (not shown in the figure) are electrically connected to the battery 320 of the headphone case 300. Specifically, the first battery and the second battery may be respectively electrically connected to the battery 320 of the headphone case 300 by using the two charging columns 314, so that the battery 320 of the headphone case 300 can charge the first battery and the second battery, to increase endurance time of the headphone 100. In addition, compared with the headphone 100 that has a same endurance requirement, a power source capacity of the ear cover 10 in the headphone 100 shown in this embodiment can be reduced, so that a power source weight of the ear cover 10 can be reduced, thereby reducing a weight of the headphone 100, and implementing a lightweight design of the headphone 100. It should be understood that, in another embodiment, the battery 320 of the headphone case 300 may alternatively charge the first battery and the second battery by using an electrically connected pin needle (pin needle) or in a wireless charging manner. This is not specifically limited in this application.

An embodiment of this application provides another headphone assembly. The headphone assembly includes a headphone case and the foregoing headphone 100. The headphone 100 may be detachably placed inside the headphone case. The headphone case can not only accommodate and protect the headphone 100, but also facilitate transportation and carrying of the headphone 100.

The foregoing descriptions are merely specific implementations of this application, but the protection scope of this application is not limited thereto. Any person skilled in the art can easily conceive modifications or replacements within the technical scope of this application, and these modifications or replacements shall fall within the protection scope of this application. When there is no conflict, embodiments of this application and the features in the embodiments may be mutually combined. Therefore, the protection scope of this application shall be subject to the protection scope of the claims.

## Claims

1. A headphone, comprising a first ear cover, a second ear cover, and a headband, wherein the first ear cover comprises a first headphone housing, and a first Bluetooth module and a first speaker that are located inside the first headphone housing, the first Bluetooth module is configured to receive a Bluetooth signal from a terminal, and the first speaker is configured to play audio based on the Bluetooth signal received by the first Bluetooth module;
the second ear cover comprises a second headphone housing, and a second Bluetooth module and a second speaker that are located inside the second headphone housing, the second Bluetooth module is configured to receive a Bluetooth signal from the terminal, and the second speaker is configured to play audio based on the Bluetooth signal received by the second Bluetooth module; and
two ends of the headband are respectively connected to the first headphone housing and the second headphone housing.

2. The headphone according to claim 1, wherein the headband is detachably connected to the first headphone housing and the second headphone housing.

3. The headphone according to claim 2, wherein the first headphone housing is provided with a first fastening groove, and an opening of the first fastening groove is located on a surface of the first headphone housing;
the second headphone housing is provided with a second fastening groove, and an opening of the second fastening groove is located on a surface of the second headphone housing; and
the headband comprises a first end portion and a second end portion that are disposed opposite to each other, the first end portion is located in the first fastening groove and is in an interference fit with the first fastening groove, and the second end portion is located in the second fastening groove and is in an interference fit with the second fastening groove.

4. The headphone according to claim 2 or 3, wherein the headband is foldable.

5. The headphone according to claim 4, wherein the headband comprises a support plate and a chain strip fastened to the support plate, the support plate is made of an elastic material, the chain strip comprises a plurality of sequentially connected chain links, and two adjacent chain links are rotatably connected to each other.

6. The headphone according to any one of claims 1 to 3, wherein the first ear cover further comprises a first processor, the first processor is located inside the first headphone housing, and is electrically connected to the first Bluetooth module and the first speaker, the first processor is configured to convert the Bluetooth signal received by the first Bluetooth module into an audio signal, and the first speaker is configured to play audio based on the audio signal sent by the first processor; and
the second ear cover further comprises a second processor, the second processor is located inside the second headphone housing, and is electrically connected to the second Bluetooth module and the second speaker, the second processor is configured to convert the Bluetooth signal received by the second Bluetooth module into an audio signal, and the second speaker is configured to play audio based on the audio signal sent by the second processor.

7. The headphone according to any one of claims 1 to 3, wherein the first headphone housing comprises an ear muff, an ear pad, and a bracket, the ear muff is made of a rigid material, the ear pad is made of a flexible material and is fixedly connected to the ear muff, the bracket is located between the ear muff and the ear pad, and is fixedly connected to the ear pad, and the first Bluetooth module and the first speaker are fastened to one side that is of the bracket and that is away from the ear pad.

8. The headphone according to claim 7, wherein the bracket comprises an outer surface facing the ear muff, the first speaker is fastened to a middle region of the outer surface of the bracket, and the first Bluetooth module is fastened to an edge region of the outer surface of the bracket.

9. The headphone according to claim 7, wherein the ear muff comprises an inner surface facing the ear pad, the ear muff is provided with a clamping groove, and an opening of the clamping groove is located on the inner surface of the ear muff; and
the ear pad comprises an outer surface facing the ear muff, the ear pad is provided with a clamping portion, the clamping portion protrudes on the outer surface of the ear pad, and the clamping portion is clamped in the clamping groove.

10. The headphone according to claim 7, wherein the first headphone housing further comprises a sealing ring, and the sealing ring is clamped between the ear muff and the ear pad.

11. The headphone according to claim 7, wherein a structure of the second headphone housing is the same as a structure of the first headphone housing, and the second Bluetooth module and the second speaker are fastened to one side that is of the bracket of the second headphone housing and that is away from the ear pad of the second headphone housing.

12. The headphone according to claim 1, wherein the first ear cover further comprises a first battery, and the first battery is located inside the first headphone housing, and is electrically connected to the first Bluetooth module and the first speaker; and
the second ear cover further comprises a second battery, and the second battery is located inside the second headphone housing, and is electrically connected to the second Bluetooth module and the second speaker.

13. A headphone assembly, comprising a headphone case and the headphone according to any one of claims 1 to 12, wherein the headphone is detachably placed inside the headphone case.

14. A headphone assembly, comprising a headphone case, and a first ear cover, a second ear cover, and a headband that are detachably placed inside the headphone case, wherein the first ear cover comprises a first headphone housing, and a first Bluetooth module and a first speaker that are located inside the first headphone housing, the first Bluetooth module is configured to receive a Bluetooth signal from a terminal, and the first speaker is configured to play audio based on the Bluetooth signal received by the first Bluetooth module;
the second ear cover comprises a second headphone housing, and a second Bluetooth module and a second speaker that are located inside the second headphone housing, the second Bluetooth module is configured to receive a Bluetooth signal from the terminal, and the second speaker is configured to play audio based on the Bluetooth signal received by the second Bluetooth module;
the first ear cover and the second ear cover are disposed opposite to each other, and the headband is disposed around the first ear cover and the second ear cover; and
after the first ear cover, the second ear cover, and the headband are taken out of the headphone case, the headband can be detachably connected to the first headphone housing and the second headphone housing.

15. The headphone assembly according to claim 14, wherein the headphone case is in an elliptic cylindrical shape, the first headphone housing comprises an ear muff and an ear pad, the ear muff is made of a rigid material, the ear pad is made of a flexible material, and is fixedly connected to the ear muff, and a structure of the second headphone housing is the same as a structure of the first headphone housing; and
the first ear cover and the second ear cover are located in a middle portion of the headphone case, an ear pad of the first ear cover and an ear pad of the second ear cover are disposed opposite to each other, and the headband is disposed around an edge of the headphone case.

16. The headphone assembly according to claim 14 or 15, wherein the headphone case comprises a housing and a battery located inside the housing;
the first ear cover further comprises a first battery, the first battery is located inside the first headphone housing, and is electrically connected to the first Bluetooth module and the first speaker, the second ear cover further comprises a second battery, and the second battery is located inside the second headphone housing, is electrically connected to the second Bluetooth module and the second speaker; and
the first ear cover, the second ear cover, and the headband are placed inside the housing, and the first battery and the second battery are electrically connected to the battery of the headphone case.

17. The headphone assembly according to claim 16, wherein a charging socket is disposed in the housing, and the charging socket of the housing is electrically connected to the battery of the headphone.
